**Europäisches Patentamt**

**European Patent Office**

**Office européen des brevets**

(19)

(11) Veröffentlichungsnummer: **0 147 504**

**A2**

(12) ## EUROPÄISCHE PATENTANMELDUNG

(21) Anmeldenummer: **84104455.5**

(22) Anmeldetag: **19.04.84**

(51) Int. Cl.⁴: **A 47 J 41/02**

(30) Priorität: **05.01.84 DE 8400247 U**

(43) Veröffentlichungstag der Anmeldung:
**10.07.85 Patentblatt 85/28**

(84) Benannte Vertragsstaaten:
**BE CH DE FR GB IT LI LU NL SE**

(71) Anmelder: **Rotpunkt Dr. Anso Zimmermann
Industriestrasse
D-6434 Niederaula / Bad Hersfeld(DE)**

(72) Erfinder: **Zimmermann, Anso, Dr.
Seilerweg 34
D-6434 Niederaula(DE)**

(74) Vertreter: **Körber, Wolfhart, Dr. et al,
Patentanwälte Dipl.-Ing. H. Mitscherlich Dipl.-Ing. K.
Gunschmann Dr.rer.nat. W. Körber Dipl.Ing. J.
Schmidt-Evers Dipl.-Ing. W. Melzer Steinsdorfstrasse 10
D-8000 München 22(DE)**

(54) **Kanne, insbesondere Isolierkanne.**

(57) Es wird eine Kanne mit einem Gehäuse beschrieben, dessen oberseitige Öffnung durch einen Deckel verschließbar ist, der wenigstens in seiner Verschlußstellung form- oder kraftschlüssig nach außen dicht mit dem Gehäuse verbunden ist, und mit einer einstückig an das Gehäuse angeformten, geschlossenen Schnaupe. Die Schnaupe weist einen sich einwärts erweiternden, konusförmigen, oberhalb der Öffnung mündenden Ausgießkanal auf. Das Gehäuse weist unterhalb der Öffnung eine Fassung auf und der Deckel weist einen unterseitig in seiner Verschlußstellung koaxial angeorbneten Vorsprung auf, wobei die Form- oder Kraftschluß-Verbindung (12, 13) zwischen der Fassung (11) und dem Vorsprung (14) erfolgt.

FIG.1

EP 0 147 504 A2

Kanne, insbesondere Isolierkanne

Die Erfindung bezieht sich auf eine Kanne nach dem Oberbegriff des Anspruchs 1.

Bei einer solchen bekannten Kanne bedarf es zur Formung
des kegelförmigen Ausgießkanals in der Schnaupe eines
entsprechend kegelförmig geformten Kerns, der nach dem
Spritzen nach innen gezogen werden muß, um ihn zu entfernen. Diese zuletzt genannte Maßnahme ist bei der bekannten Bauart problematisch, weil der Deckel mit einem
Gewinde in ein Gegen-Gewinde an der Innenwand einer im
Gehäuse oberhalb der Öffnung angeordneten Ausnehmung
greift, in die der Ausgießkanal der Schnaupe mündet.
Zur Formung des gehäuseseitigen Gewindes ist deshalb
entweder ein herausdrehbarer (Gewinde) oder ein sogenannter zusammenfallender Kern notwendig. Beide Möglichkeiten sind im Hinblick auf das Vorhandensein des
nach innen ziehbaren Kerns im Ausgießkanal problematisch,
weil die Anordnung dieses Kerns angesichts des eine
Bewegung (Drehen,Zusammenfallen) ausführenden Kerns für
das gehäuseseitige Gewinde erschwert ist.

Der Erfindung liegt die Aufgabe zugrunde, eine Kanne
dervorliegenden Bauart so auszugestalten, daß ein für
die Ausbildung des Ausgießkanals in einer geschlossenen
Schnaupe notwendiger Kern in einfacher Weise anzuordnen
bzw. nach innen ziehbar ist.

Diese Aufgabe wird durch das Kennzeichen des Anspruchs 1
gelöst.

Bei einer entsprechend ausgebildeten Kanne ist die Anordnung bzw. das Ziehen nach innen des den Ausgießkanal
in der Schnaupe bildenden Kerns deshalb vereinfacht,
weil es zur Formung der Ausnehmung, in die der Ausgießkanal mündet, eines einfachen Kerns bedarf, der nach dem Spritzen lediglich herausgezogen zu werden braucht. Beim Vorhandensein eines solchen Kerns läßt sich der Kern zur Ausbildung des Ausgießkanals in der Schnaupe natürlich einfach integrieren.

Unabhängig vom vorgenannten Vorteil, führt die erfindungsgemäße Ausgestaltung zu einem Deckel einfacher Form und geringer Baugröße , der deshalb einfach und preiswert herzustellen ist.

Die erfindungsgemäße Ausgestaltung führt auch dann zu Vorteilen, wenn anstelle einer Formschluß-Verbindung eine Kraftschluß-Verbindung zwischen dem Deckel und dem Gehäuse vorgesehen ist, beispielsweise in Form einer bekannten Expansionsdichtung. Eine solche Dichtung kann bei einer erfindungsgemäßen Ausgestaltung erheblich kleiner ausgelegt werden, was nicht nur im Hinblick auf die Bedienung sondern auch auf die Herstellungskosten von Bedeutung ist. Bei Isolierkannen mit einsetzbarem Gefäß ergibt sich der Vorteil, daß der Kern zum Formen der Fassung einwärts gezogen werden kann, um ihn zu entfernen.

Gemäß Anspruch 2 ist die Formschluß-Verbindung durch ein Gewinde gebildet. Hierdurch läßt sich der Deckel leicht und bequem handhaben, und es ist auch ein sicherer Verschluß gewährleistet.

Die Ausbildungen nach den Ansprüchen 3 und 4 ergeben nicht nur einfache Ausgießkanäle, sondern sie ermöglichen auch, daß insbesondere ein Schraubdeckel nicht vollends entfernt werden muß, um ausgießen zu können. Zum Ausgießen bedarf es lediglich einer geringen Öffnungsbewegung des Deckels, um die Ausgießkanäle wirksam werden zu lassen. In dieser Ausgießstellung ist der Deckel sicher

0147504

im Gehäuse gehalten, so daß er beim Schrägstellen der Kanne während des Ausgießens nicht festgehalten zu werden braucht. Von großer Bedeutung ist auch die sich ergebende Wärmesperre in der Öffnungsstellung des Deckels.

Im Hinblick auf die Forderung, eine Kanne vollends entleeren zu können, empfiehlt sich die Ausgestaltung nach Anspruch 5. Hier ist der Ausgießkanal beim Ausgießen an der jeweils tiefsten Stelle der Öffnung angeordnet, so daß bei entsprechender Schrägstellung der Kanne der Inhalt vollends ausfließen kann.

Bei einer Ausbildung nach Anspruch 6 vermag der Teil des Deckels oberhalb des Vorsprungs nicht nur der Handhabung des Deckels zu dienen, sondern er vermag auch die Dichtungsfunktion zu erfüllen, indem er die Öffnung verschließt. Wenn die Ausnehmung wenigstens auf der der Schnaupe gegenüberliegenden Seite radial vergrößert ist, ergibt sich ein verhältnismäßig großer Raum, durch den zum einen das Ziehen des die Ausgießöffnung in der Schnaupe bildenden Kerns erleichtert wird, und zum anderen Schnaupen größerer Länge ausgebildet werden können.

Die Ausbildungen nach den Ansprüchen 7 und 8 verbessern die Handhabung des Deckels oder der Kanne. Gemäß Anspruch 7 läßt sich die Ausgießstellung des Deckels zielsicher einstellen.

Die Ausgestaltung nach Anspruch 9 ermöglicht die größtmögliche Öffnung für den Zugang zum Inneren des Isoliergefäßes und kann dessen Stabilisierung im Gehäuse unterstützen.

Nachfolgend wird ein Ausführungsbeispiel der Erfindung anhand einer vereinfachten Zeichnung näher beschrieben.

Es zeigen

Fig. 1   eine erfindungsgemäß ausgebildete Isolierkanne
        im lotrechten Schnitt und mit abgehobenem
        Deckel und

Fig. 2   eine Unteransicht des Deckels.


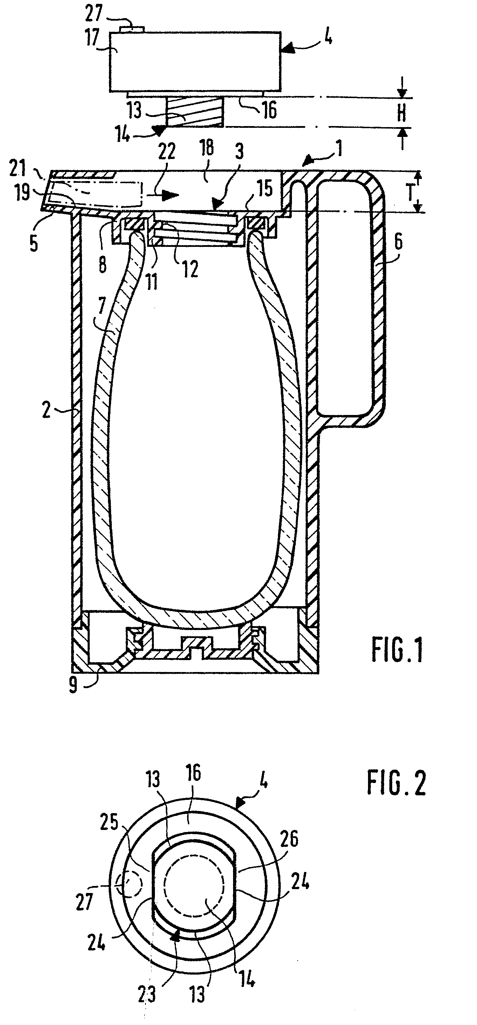

Die in Fig. 1 allgemein mit 1 bezeichnete Kanne ist eine
Isolierkanne mit einem insbesondere aus Kunststoff gespritzten
Gehäuse 2, dessen oberseitige Öffnung 3    durch einen Deckel
4 verschließbar ist, mit einer einstückig angespritzten,
geschlossenen Schnaupe 5, einem ebenfalls einstückig
angespritzten Henkel 6 und einem im Gehäuse 2 aufgenommenen Isoliergefäß 7, das zwischen einer im oberen
Bereich des Gehäuses angeordneten Gehäuseschulter 8
und einem Gehäuseboden 9 eingespannt ist, der mit dem
Gehäuse 2 verschraubbar ist. Die Öffnung 3 ist innerhalb der Gehäuseschulter 8 angeordnet, und zwar wird
sie durch eine ringförmige Fassung 11 gebildet, die
sich von der Gehäuseschulter 8 einwärts erstreckt. In
der Fassung ist ein Innengewinde 12 eingearbeitet, in
das ein mit einem entsprechenden Außengewinde 13 versehener Vorsprung 14 des Deckels 4 einschraubbar ist,
der von der Unterseite des Deckels 4 koaxial absteht.
Die Dichtfläche der Öffnung 3 ist mit 15 und die Dichtfläche des Deckels 4 ist mit 16 bezeichnet. In der
eingeschraubten Position des Deckels 4, der Verschlußstellung, ist der als Handhabe 17 zu bezeichnende,
zylindrische Teil des Deckels 4 in einer Ausnehmung 18
im Gehäuse 2 aufgenommen, die sich oberhalb der Öffnung
3 befindet und gegenüber dieser radial vergrößert ist.
In dieser Ausnehmung 18 mündet ein einwärts kegelförmig
divergierender Ausgießkanal 19 in der Schnaupe 5.
Zur Herstellung des Gehäuses 2 als Spritz- oder Gießteil
ist zur Ausbildung des Ausgießkanals 19 ein strichpunktiert und vereinfacht dargestellter konischer Kern 21 erforderlich, der zum Entformen nach innen gezogen werden muß. Es ist erkennbar, daß zum einen der Kern 21 in Richtung des Pfeiles 22 gezogen werden kann, um entfernt zu werden. Wenn lange Schnaupen verwirklicht werden sollen, empfiehlt es sich, den Ausgießkanal 19 bzw. den Kern 21 so anzuordnen, daß dieser radial nach innen gezogen werden kann. In solchen Fällen stellt sich der der Schnaupe 5 gegenüberliegende Raum der Ausnehmung 18 als verhältnismäßig großer Freiraum dar, in den der Kern 21 gezogen werden kann.

Wenn eine steilere Anordnung der Schnaupe 5 erwünscht ist, empfiehlt sich eine größere Tiefe T für die Ausnehmung 18, so daß der Kern 21 bis zum ihm gegenüberliegenden Öffnungsrand bzw. in die Öffnung 3 hinein gezogen werden kann um entfernt zu werden.

In die Mantelfläche 23 des in der Verschlußstellung des Deckels 4 in die Öffnung 3 einfassenden Vorsprung 14 sind einander gegenüberliegend zwei Abflachungen 24 eingearbeitet, die sich über die gesamte Höhe H des Vorsprungs 14 erstrecken, allerdings unterhalb der Dichtfläche 16 des Deckels 4 enden. Diese Abflachungen 24 stellen die Fassung 11 umgehende Kanäle dar, von denen der mit 25 bezeichnete Kanal einen Ausgießkanal und der mit 26 bezeichnete Kanal einen Belüftungskanal bildet. Der in Fig. 1 in abgehobener Position dargestellte Deckel 4 befindet sich im Hinblick auf seine Drehstellung in der Ausgießstellung, in der der Ausgießkanal 25 und der Belüftungskanal 26 wirksam sind, weil die Dichtungsflächen 15,16 geringfügig voneinander entfernt sind, was durch ein Verdrehen des Deckels 4 um (hier) 180° bewirkt wird. Der mit 27 bezeichnete Ansatz auf der Oberseite des Deckels 4 stellt eine Markierung dar, an der zu erkennen ist, in welcher Position der Deckel 4 sich befindet, bzw. wie weit der Deckel 4 zu drehen ist, um die Ausgieß- stellung oder die Verschlußstellung zu erreichen. In der Ausgießstellung weist der Ansatz 27 auf die Schnaupe 5, während in der Verschlußstellung der Ansatz 27 auf den Henkel 6 weist. In dieser Stellung befindet sich der Belüftungskanal auf der Seite der Schnaupe 5.

In der Ausgießstellung steht das Gewinde noch im Eingriff, so daß der Deckel 4 auch bei extremer Schrägstellung der Isolierkanne 1 sicher gehalten ist.

Selbstverständlich sind noch andere Ausführungsformen möglich. Bei einem Expansionsverschluß anstelle des Schraubverschlusses ist innerhalb des Vorsprungs des Deckels ein Kanal vorgesehen. Der Ausgießkanal der geschlossenen Schnaupe kann zylindrisch oder auch pyramidenstumpfförmig sein. Eine der Dichtflächen kann durch eine elastische Dichtungslippe gebildet sein. Statt den Abflachungen 24,25 können Nuten in dem Vorsprung und/oder der Fassung vorliegen, gegebenenfalls können auch gewindefreie Bereiche ausreichend sein.
Statt einem Kunststoffspritzteil ist auch ein Metallgußteil möglich.

Rotpunkt
Dr. Anso Zimmermann
Industriestraße

6434 Niederaula

ANSPRÜCHE

1. Kanne mit einem Gehäuse, dessen oberseitige Öffnung durch einen Deckel verschließbar ist, der wenigstens in seiner Verschlußstellung form- oder kraftschlüssig nach außen dicht mit dem Gehäuse verbunden ist, und mit einer einstückig an das Gehäuse angeformten, geschlossenen Schnaupe, die einen sich einwärts erweiternden, konusförmigen, oberhalb der Öffnung mündenden Ausgießkanal aufweist, insbesondere Isolierkanne, in deren Gehäuse ein Isoliergefäß einsetzbar ist, dadurch gekennzeichnet, daß das Gehäuse (2) unterhalb der Öffnung (3) eine Fassung (11) aufweist und daß der Deckel (4) einen unterseitig und in seiner Verschlußstellung koaxial zur Fassung (11) angeordneten Vorsprung (14) aufweist, wobei die Form- oder Kraftschluß-Verbindung (12,13) zwischen der Fassung (11) und dem Vorsprung (14) erfolgt.

2. Kanne nach Anspruch 1,
dadurch gekennzeichnet,
daß die Formschluß-Verbindung durch ein Gewinde (12,13)
gebildet ist.


3. Kanne nach Anspruch 1 oder 2,
dadurch gekennzeichnet,
daß in der Mantelfläche (23) des Vorsprungs (14)
und/oder der Fassung (11) wenigstens eine sich etwa
axial erstreckende Abflachung (24) oder Nut vorgesehen
ist, die vor der Dichtungsfläche (16) des Deckels (4)
endet.


4. Kanne nach Anspruch 1 oder 2,
dadurch gekennzeichnet,
daß im Vorsprung (14) des Deckels (4) ein innen
liegender Kanal vorgesehen ist, der unterhalb der
Dichtungsfläche (16) am Deckel (4) etwa radial ausmündet.


5. Kanne nach Anspruch 3 oder 4,
dadurch gekennzeichnet,
daß der Deckel (4) eine Ausgießstellung hat, die gegenüber seiner Schließstellung um einen vorgegebenen
Drehwinkel, insbesondere 180°, versetzt ist, und die
Abflachung (24) oder Nut bzw. der Kanal sich in der
Ausgießstellung des Deckels (4) auf der zur Schnaupe
(5) weisenden Seite des Deckels (4) befindet.


6. Kanne nach einem der Ansprüche 1 bis 5,
dadurch gekennzeichnet,
daß der Deckel (4) wenigstens teilweise in einer Ausnehmung (18) des Gehäuses (2) oberhalb der Öffnung (3)
aufnehmbar ist, wobei bevorzugt die Ausnehmung (18)
gegenüber der Öffnung (3) wenigstens auf der der
Schnaupe (5) abgewandten Seite radial vergrößert ist.

**0147504**

7. Kanne nach einem der Ansprüche 1 bis 6,
dadurch gekennzeichnet,
daß am Deckel (4) eine Markierung (27) vorgesehen
ist, die wenigstens in der Ausgießstellung des Deckels
(4) auf eine am Gehäuse (3) vorgesehene Markierung
oder auf die Schnaupe (5) weist.

8. Kanne nach einem der Ansprüche 1 bis 7,
dadurch gekennzeichnet,
daß die Kanne (1) einen einstückig, der Schnaupe (5)
diametral gegenüberliegenden Henkel (6) aufweist.

9. Kanne nach einem der Ansprüche 1 bis 8,
dadurch gekennzeichnet,
daß bei einer Isolierkanne (1) die Fassung (11) mit
geringem Bewegungsspiel in das Isoliergefäß (7) einfaßt.

0147504

1 / 1

FIG.1

FIG.2